# EUROPEAN PATENT APPLICATION

(11) **EP 2 028 156 A1**
(43) Date of publication of application: **25.02.2009**
(21) Application number: 07114721.9
(22) Date of filing: 21.08.2007
(51) Int. Cl.: C01B 3/32, C01B 3/34, C01B 3/38

(54) **Steam reaction process**

(71) Applicant: Pinchco, 2920 Kalmthout (BE)
(72) Inventor: Declercq, Daniël, 2920 Kalmthout (BE)
(74) Representative: Quintelier, Claude

(57) **Abstract**

A steam reaction process, in particular a steam-hydrocarbon process, comprising the steps of:
- transferring heat and mass from a first liquid water stream to a feed stream in a first direct heat and mass exchange in which said feed stream is substantially saturated with steam evaporated from said first liquid water stream;
- reacting at least part of said feed stream with at least part of said steam so as to produce an output stream comprising at least one reaction product and steam;
- transferring heat and mass from said output stream to a second liquid water stream in a second direct heat and mass exchange in which water is condensed from said output stream; wherein
- said first liquid water stream comprises at least part of a liquid water output from the second direct heat and mass exchange;
- said second liquid water stream comprises at least part of a liquid water output from the first direct heat and mass exchange;

wherein more water is evaporated in the first direct heat and mass exchange than is condensed in the second direct heat and mass exchange, and an additional liquid water stream is introduced in the second direct heat and mass exchange so as to maintain the liquid water balance in the process.

## Description

The present invention relates to a steam reaction process, in particular a steam-hydrocarbon reaction process.

Numerous chemical processes use reactions between steam and a feed stream to produce an output stream comprising at least one output product. For instance, in the so-called Steam-Methane-Reforming (SMR) process, a hydrocarbon feed stream, mostly methane supplied as natural gas, is mixed with large quantities of steam in order to obtain a reaction mixture with a certain steam-to-carbon ratio, dictated by a number of process parameters and final product mix objectives. Steam-to-carbon ratios may vary from 1:1 to 4.5. A typical value would be 3:1.

This reaction mixture is used to produce a reformate called "synthesis gas" or "syngas". This reformate is an output stream enriched in hydrogen (H₂) and carbon monoxide (CO) next to unreacted methane, steam and carbon dioxide (CO₂). The reaction occurs in a steam methane reformer (SMR) that contains catalyst-filled tubes housed in a furnace. The synthesis gas exiting the reformer contains hydrogen (H₂) along with carbon monoxide (CO), carbon dioxide (CO₂), steam and unconverted methane according to the equilibrium established in the following reactions:

CH₄ +H₂O → 3H₂ + CO (Steam Reforming)

H₂O +CO → H₂ + CO₂ (Water Gas Shift)

CH₄ +CO₂ → 2H₂ + 2CO (CO2 Reforming)

The above-mentioned reactions are generally carried out at high temperatures (800 °C -1000 °C) and at high pressures (5-30 bar) in the presence of nickel based catalyst. These reactions are thermodynamically controlled. Therefore, the reformate effluent composition will depend upon a number of variables including pressure, temperature, ratio of steam/methane in the feed stream and carbon dioxide concentration in the feed stream.

The reformate may be subjected to an integrated series of further reaction, purification and separation steps in order to recover a high purity H₂ product (99.9+mole %) or a high purity CO product (99.5+mole %). These operations may include, among others, "shift" reactions to further convert CO with steam to H₂ and CO₂, cooling the reformate down to approximately ambient temperature and condensing the water vapour contained in the reformate stream and separation processes such as PSA (Pressure Swing Adsorption) to obtain pure hydrogen and/or VSA (Vacuum Swing Adsorption) to obtain pure carbon monoxide. After separation and purification, the pure products may be compressed to a pressure required for delivery and by-products that have a value as fuel or as feedstock may be recycled.

In the SMR process, the heat required for the reaction used to be supplied by burning fuel and passing the hot flue gas at the outside of the reactor tubes. Recent technology developments aim at bringing the required endothermic reaction energy into the reactants by other means, either indirectly through heat exchange with exothermic reaction sections or directly by reaction heat of combustion.

Alternatively, syngas can be produced in an auto-thermal reactor (ATR) at high pressure (approximately 70 bar) whereby the heat required for the endothermic reaction is provided by burning part of the hydrocarbon feed with oxygen within the feed stream itself. In such case, no external heat source is required. The majority of the processes, however, use the SMR route described above.

Syngas is the basis for large-scale production of hydrogen. Hydrogen plays a key role in various hydroprocessing operations within oil refining in order to improve the quality of the refinery products. Hydrogen demand has grown remarkably in the last decade in order to meet ongoing environmental legislation related to transportation fuels. Development of the so-called "hydrogen economy" would give an additional boost to the development of widespread applications.

Another major use of hydrogen is as synthesis gas for the manufacture of bulk chemicals such as ammonia and methanol. Carbon monoxide, the other main component of syngas, is typically used to manufacture isocyanates and polycarbonates through phosgene chemistry. Certain processes for producing oxoalcohols require a synthesis gas having a 1:1 ratio of hydrogen to carbon monoxide.

The metal industry is also an intensive user of hydrogen as reducing agent in the production of direct reduced iron and in steel manufacturing.

According to industry sources, global production of hydrogen at present is in the range of 130 000 ton/day with roughly one-third thereof generated as on-purpose hydrogen for refineries and another third in the form of syngas for the chemicals industry. Hydrogen plant industrial design capacity now exceeds 470 ton/day of hydrogen.

A typical large-scale hydrogen plant with a capacity of, for example, 200 ton/day of hydrogen would require approximately 30 t/h of natural gas and up to 100 t/h of process steam. The generation of such quantities of steam makes SMR and similar steam reaction processes highly energy-intensive.

Steam reaction processes, and in particular steam methane reforming, like many other energy intensive processes, are the subject of continuous search for improvements whereby energy recovery is optimised or maximised in order to increase energy efficiency, to reduce thermal pollution and to reduce manufacturing cost and emissions. One key aspect to obtain such increased energy efficiency is the recovery of heat from and within the process itself, what is known as heat integration.

The impact of the improved energy efficiency can be estimated as follows. Saving 10%, that is, 10 t/h, of the approximately 100 t/h of process steam required in the abovementioned typical large-scale hydrogen plant, with a value between 20 and 30 €/tonne and an utilisation of 7500 hours/year, represents an economic benefit of 1.5 to 2.2 M€/year. Displacing this amount of steam generation by waste heat recovery also reduces the cold utility requirements, saves up to more than 1 t/h of fuel and cuts CO₂ emissions by more than 15 000 ton/year.

To improve energy efficiency and economy in processes by heat integration, it has been proposed in the last years to use the so-called pinch technology, as disclosed, for instance, in "General Process Improvements Through Pinch Technology" by B. Linnhoff and G.T. Polley, Chemical Engineering Progress, June 1988.

Pinch technology represents a straightforward and practical methodology for systematically applying the First and Second Laws of Thermodynamics to chemical processes and their surrounding hot and cold utilities. The First Law of Thermodynamics provides the energy equation for calculating the enthalpy changes ΔH in a heat exchange. The Second Law determines the direction of heat flow. Heat may only flow from hot to cold, without temperature crossovers. In a heat exchange between a hot stream and a cold stream, neither the hot stream may be cooled down below the supply temperature of the cold stream, nor the cold stream heated up beyond the supply temperature of the hot stream. In practice, heat exchange between a hot stream and a cold stream in a heat exchanger will only occur while there is at least a minimum temperature difference, called minimum temperature approach DTₘᵢₙ, between the two streams, driving the heat transfer from the hot stream to the cold stream.

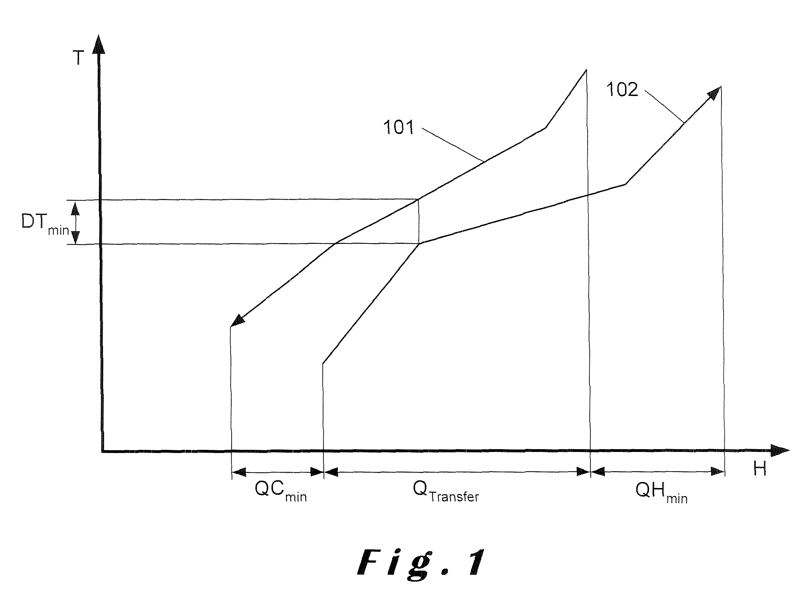

The heat availability in a process may be represented by so-called composite T-H (temperature-enthalpy) curves. A stream with a constant heat capacity is represented on a T-H diagram by a straight line from stream supply temperature to stream target temperature. In a composite curve representing a T-H profile for a plurality of streams, the enthalpy changes of the streams are added over their overlapping temperature changes. An example of composite curve construction is shown in Fig. 1.

When composite curves 101,102 are plotted for, respectively, the hot streams and the cold streams in a process, because of the Second Law of Thermodynamics, the hot stream curve 101 must remain above the cold stream curve 102, separated by a temperature difference, shown in the plot as a vertical distance, of at least the abovementioned minimum temperature approach DTₘᵢₙ. This point of minimum temperature difference represents a bottleneck in heat recovery and is called the pinch point. For a particular DTₘᵢₙ value, the horizontal overlap between the two curves represents the maximum scope for heat recovery within the process. The hot end and cold end overshoots indicate minimum hot utility (QHₘᵢₙ) and cold utility (QCₘᵢₙ) requirements for that process with that temperature approach DTₘᵢₙ. An increased DTₘᵢₙ will shift the curves horizontally apart, resulting in a smaller overlap, and thus a reduced scope for heat recovery and increased hot and cold utility requirements.

The pinch point divides the process into two separate systems, a hot system and a cold system, each of which is in enthalpy balance with the corresponding hot or cold utility. Above the pinch point, external cooling will be inefficient. Below the pinch point, external heating will be inefficient. And, for an optimum design, the heat exchange across the pinch should be minimised, and preferably excluded altogether.

Pinch technology thus dictates three basic rules for maximum heat recovery:
No external heating below the pinch point;
No external cooling above the pinch point; and
No heat transfer across the pinch point.

Pinch analysis for a typical SMR process indicates that the process pinch is originally caused by the dew point of the unreacted steam in the reformate. The heat requirement of the endothermic reaction at reactor temperature level (800°C to 1000°C) is satisfied by hot flue gas from burning fuel around the reactor tubes. Optimising this hot utility supply will generate a so-called utility pinch at reactor temperature level and will open up the gap between the hot and cold stream curves below this utility pinch, causing the original process pinch to disappear. Heat available in the flue gas below the reactor temperature level, after having satisfied all other process heat requirements, can be used to generate steam, used in the process as process steam, or for export. Maximising energy recovery by increasing said amounts of steam, however, will cause the original process pinch to reappear. Therefore, said maximum energy recovery will be achievable only if the abovementioned basic pinch technology rules are also respected with regard to the said process pinch.

In "Natural Gas Conversion - The Reforming and Fischer-Tropsch processes" by S. Lödberg, H. Jacobsen an E. Hessen, TKP 4145 Reactor technology - Compendium - Spring 2006, a process is shown wherein the feed stream, while it is being saturated with steam, receives heat from a methanol synthesis section in a heat exchange through a water pump-around system. This concept, however, does not recover heat from the steam process itself. As it does not provide for water recovery from the unreacted steam in the output stream, what is known as mass integration, it will have the additional drawback of requiring a large external water supply to generate the process steam.

In "A comparison of the eco-efficiency of two production routes for methanol" by J.Hugill, J. Overbeek and S. Spoelstra, ECN, The Netherlands, ref. ECN-I--01-003 February 2001, a conventional methanol process is disclosed, wherein the hydrocarbon feed stream is saturated in a heat and mass exchange with liquid water in a packed column. In the design of this process, however, no rigorous pinch analysis was carried out for the placement of heat exchangers for heat integration. It thus appears that the heat for the steam saturation of the feed stream is not supplied by waste heat, but by hot utilities (flue gas and steam) from above the earlier mentioned process pinch point created by the water phase change in the reformate and that, consequently, there is no heat integration nor is there any mass integration, nor is there any energy saving since the heat is supplied from above said pinch point.

In United States Patent Application US 2006/0216228 A1, as well as in United States Patent US 4,681,603, a number of processes and devices are disclosed for mixing a stream of liquid water with a feed stream and to heat the combined streams with an external heat source in order to evaporate the water to become steam. However, such a process, using a so-called two-phase evaporator, requires a heat source other than the liquid water itself.

Both United States Patents US 4,072,625 and US 4,238,403, disclose, under "Example 2", a steam reaction process comprising the steps of:
Transferring heat and mass from a first liquid water stream to a feed stream in a first direct heat and mass exchange in which said feed stream is substantially saturated with steam evaporated from said first liquid water stream;
reacting at least part of said feed stream with at least part of said steam so as to produce an output stream comprising at least one reaction product and steam;
transferring heat and mass from said output stream to a second liquid water stream in a second heat and mass exchange in which water is condensed from said output stream; and wherein
said first liquid water stream comprises at least part of a liquid water output from the second direct heat and mass exchange;
said second liquid water stream comprises at least part of a liquid water output from the first direct heat and mass exchange.

By circulating liquid water in both directions between the first direct heat and mass exchange and the second direct heat and mass exchange, a certain degree of heat and mass integration is achieved in this steam reaction process, reducing its reliance on heat and cold utilities, as well as on external water supplies.

However, in this steam reaction process of the prior art, a mass and heat flow equilibrium will be reached in which only as much steam evaporates from the first liquid water stream as condenses into the second liquid water stream, and only as much heat will be transferred from the output stream into the second liquid water stream as is transferred from the output stream to the second water stream. This double, mass and heat flow equilibrium in the liquid water circulation islimiting the heat integration from the output stream to the feed stream, and, as a result, the temperature approaches at the pinch point in both the first and the second direct heat and mass exchanges are not minimised to the minimum temperature approaches DTₘᵢₙ achievable in such direct heat and mass exchanges.

Maximum energy recovery in the steam process generates a pinch point, caused by the dew point of the steam in the output stream. While pinch technology rules out pure heat transfer across the pinch point, it has been found that a heat and mass exchange may well comprise a below-pinch and an above-above pinch part without negatively affecting energy efficiency, as long as it is linked to a corresponding heat and mass exchange in the opposite direction, with matching below-pinch and above-pinch parts. In practice, the two heat and mass exchanges of the prior art steam process are linked by the circulating liquid water that acts as a heat and mass carrier between the output stream and the feed stream. However, in this prior art steam reaction process, the output stream enters the second direct heat and mass exchange at a temperature of 200°C, which, at the parameters given in this disclosure appears to be clearly above the pinch point formed by its dew point, which should be around 176°, whereas the steam-saturated feed stream exits the first mass and heat exchange at a temperature of 170°C, thus clearly not above the pinch point temperature for the cold composite curve, even taking into account a reasonable minimum temperature approach DTₘᵢₙ between the output stream and the feed stream. It results that, while the feed stream temperature never exceeds the pinch point during the first direct heat and mass exchange, there is an unmatched above-pinch part of the second direct heat and mass exchange, wherein the incoming overheated output stream heats up the liquid water output above the pinch point. This additional heat will not be efficiently recovered in the first direct heat and mass exchange, as the feed stream is not heated up above the pinch point. Said additional heat will be used in the first direct heat and mass exchange below the pinch, thus violating the third pinch technology rule and causing a corresponding loss of efficiency. As a result, an additional external heat input will be required for achieving the maximum possible steam generation, or the effective steam generation will be reduced by an equivalent amount of steam.

The problem to be solved by the steam reaction process of the invention is that of improving energy efficiency by better heat and mass integration.

In order to solve this problem, more water is evaporated in the first direct heat and mass exchange than is condensed in the second direct heat and mass exchange, and an additional liquid water stream is introduced in the second direct heat and mass exchange so as to maintain the liquid water balance in the process. By introducing the additional water stream, it becomes possible to maintain the liquid water balance while evaporating more water in the first direct heat and mass exchange than is condensed in the second direct heat and mass exchange, which is necessary to substantially achieve the minimum temperature approaches DTₘᵢₙ in both the first and second direct heat and mass exchanges. It will thus be possible to fulfil the pinch technology conditions for optimal heat recovery in this process.

The steam reaction process of the invention thus offers an improved energy efficiency, which, considering the steam quantities involved in industrial applications of such processes, can result in large energy savings.

Preferably, in order to fulfil the pinch technology requirements, the additional liquid water stream is such that, in the first heat and mass exchange, the first liquid water stream can be maintained at such a level that said first liquid water stream and the feed stream follow temperature-enthalpy curves whose tangents are parallel at their closest temperature approach.

For even better heat integration, said additional water stream may be previously heated up to a temperature close to, but not higher than, said output stream dew point, preferably with a heat source not hotter than said output stream dew point. The use of heat from the output stream for heating up said additional water stream in the second direct heat and mass exchange is thus reduced, limiting the temperature drop of the output stream which is advantageous for the overall heat integration. Said heating-up may be advantageously carried out during a previous de-aerating step, thus avoiding the use of an additional heat exchanger for this purpose.

Advantageously, boiler feed water, for instance, for generation of steam to be used in an additional steam injection step or for export, may also be heated up during a de-aerating step, also helping to minimise the number of heat exchangers needed for achieving optimum energy recovery according to a pinch design.

Advantageously, said second water stream may be heated up, preferably with a heat source not hotter than said output stream dew point, to a temperature close, but not higher than said output stream dew point before said second direct heat and mass exchange. This helps prevent that said cooler water stream takes up too much below-pinch heat in the second direct heat and mass exchange, thus reducing the temperature drop of the output stream, which is advantageous in view of overall heat integration.

Advantageously, the first direct heat and mass exchange and/or the second direct heat and mass exchange take place in, respectively, a first and/or a second packed column. Such a packed column, which may be randomly packed or have a structured packing, allows an efficient heat and mass exchange with a particularly low temperature approach DTₘᵢₙ between a liquid and a gaseous stream of different temperatures, without needing additional external heating or cooling, as may be the case, for instance, in two-phase evaporators.

In an aspect of the present invention, the temperature of the output stream before said second direct heat and mass exchange may be not substantially higher than its dew point. In this case, both the first and the second direct heat and mass exchanges will substantially be below the pinch point. They will behave analogously to a single below-pinch heat and mass exchange between the feed stream and the output stream, with the liquid water circulation as heat and mass carrier.

In an alternative aspect of the present invention, the temperature of the output stream before said second direct heat and mass exchange may be higher than said dew point of the output stream, so that both the first heat and mass exchange and the second direct heat and mass exchange will have below-pinch and above-pinch parts. The below-pinch parts of the first and second direct heat and mass exchanges, linked by the second liquid water stream, will behave analogously to a single below-pinch heat and mass exchange, whereas the above-pinch parts of the first and second direct heat and mass exchanges, linked by the first liquid water stream will behave analogously to another single, above-pinch, direct heat and mass exchange. The pinch technology conditions will thus still be fulfilled.

Since in this case the first liquid water stream and the feed stream downstream of the first direct heat and mass exchange can reach a temperature above the pinch point, the first liquid water stream may be used as an efficient above-pinch heat and mass carrier for increased steam generation in the first direct heat and mass exchange and/or in a separate steam and/or liquid water injection step. Said first liquid water stream may thus be advantageously additionally heated up before said first direct heat and mass exchange. Then, after being additionally heated up, but before the first direct heat and mass exchange, part of the hotter liquid water stream may also be diverted for other uses, such as steam and/or liquid water injection. In this event the diverted water can be compensated with an equivalent increase in the additional liquid water stream.

Even more advantageously, said first direct heat and mass exchange may take place in a first packed column divided into
a higher temperature section with an input for the hotter water stream and an output for said feed stream with steam; and
a lower temperature section with a feed stream input and a liquid water output;

wherein the higher and lower temperature sections are connected so that the feed stream and steam flow from the lower temperature section to the higher temperature section, and liquid water flows in the opposite direction, and wherein part of said liquid water flowing out of the higher temperature section is diverted so as to rejoin the first liquid water stream, thus increasing the flow rate of the first liquid water stream and making it possible to introduce more heat into said stream without reaching its boiling point and to increase the flow rate of steam added to the feed stream in the first direct heat and mass exchange. The additional heating-up of the first liquid water stream may be carried out before and/or after said first liquid water stream is rejoined by said liquid water diverted from the higher-temperature section.

Due to the large quantities of steam needed, the present invention is particularly advantageous in hydrocarbon-steam reforming processes, wherein said feed stream contains a significant amount of a hydrocarbon, such as methane, and said output stream contains a significant amount of at least one product, such as hydrogen, carbon monoxide and/or carbon dioxide, resulting from the reaction of said hydrocarbon and steam.

Preferably, before said first direct heat and mass exchange, said feed stream is cooled down after being desulfurised. If the feed stream does not need to be desulfurised, its supply temperature will usually be below said pinch point. However, when the hydrocarbon feed needs to be desulfurised, this desulfurisation step may increase its temperature above said pinch point, in which case, after being desulfurised, preferably, said feed is cooled down.

The steam reaction process may require more steam than can economically be generated by the first direct heat and mass exchange only. Thus, it may be advantageous to also inject steam and/or liquid water into the feed stream after the first direct heat and mass exchange.

The invention will now be described illustratively, but not restrictively, with reference to the following figures:
Fig. 2A is a simplified flow chart of a conventional SMR process according to the state of the art;
Figs. 2B and 2C illustrate details of the abovementioned conventional SMR process;
Fig. 2D illustrates a conventional alternative for steam generation;
Fig. 3 is a simplified flow chart of an SMR process according to the invention;
Fig. 4A illustrates a schematic view of a first embodiment of the steam reaction process of the invention;
Fig. 4B illustrates a schematic view of a second embodiment of the steam reaction process of the invention;
Fig. 4C illustrates a schematic view of a third embodiment of the steam reaction process of the invention;
Fig. 4D illustrates a schematic view of a fourth embodiment of the steam reaction process of the invention;
Fig. 4E illustrates a schematic view of a fifth embodiment of the steam reaction process of the invention;
Fig. 4F illustrates a schematic view of a sixth embodiment of the steam reaction process of the invention;
Fig.4G illustrates a schematic view of a seventh embodiment of the steam reaction process of the invention;
Fig. 5 is a T-H diagram of the first direct heat and mass exchange in the seventh embodiment of the steam reaction process according to the invention;
Fig. 6 illustrates an additional heat recovery measure; and
Fig. 7 illustrates another additional heat recovery measure.

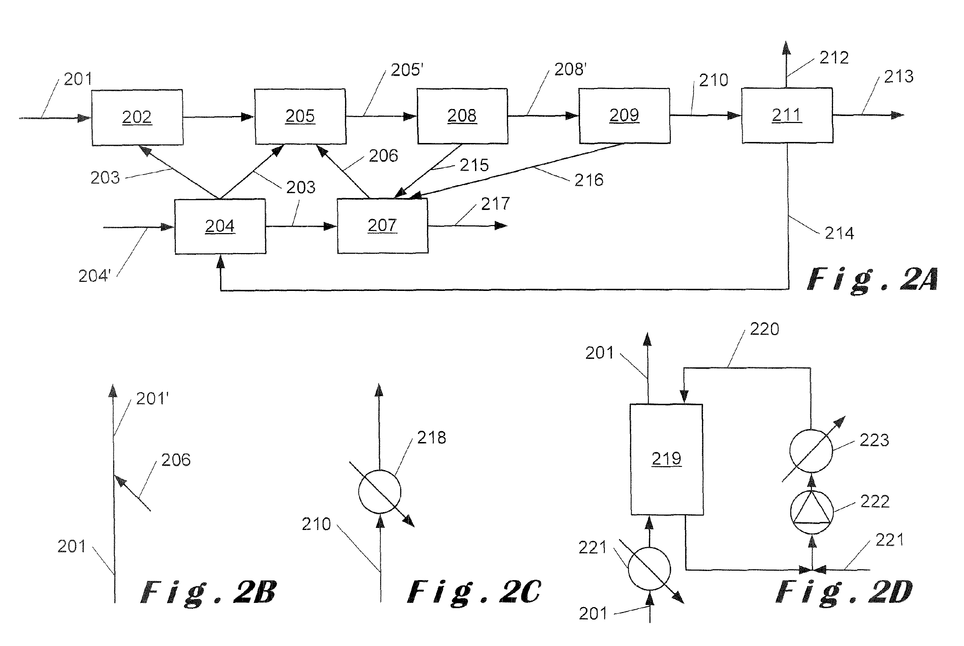

In the following detailed description and figures, several particular embodiments of the invention in the form of SMR processes will be described in detail. An example of a conventional SMR process is illustrated in Fig. 2A. In this process, a hydrocarbon feed stream 201 is first submitted to an endothermic desulfuration step 202, using heat 203 from a furnace 204, then to an endothermic reforming step 205, also using heat 203 from the furnace 204 and process steam 206 from a steam cycle 207. The resulting effluent 205' typically exits the reforming step 205 at over 800°C and is then cooled down to about 340°C before entering an exothermic high temperature shift 208. The effluent 208' of this high temperature shift 208 has a temperature of 390-450°C, which will then be cooled down to about 200°C before another exothermic, low temperature shift 209, which it will exit as an output stream 210 at about 200-230°C. In these high and low temperature shifts 208,209 carbon monoxide and steam in the effluent 205' of the reforming step 205 are further converted into hydrogen and carbon dioxide. The output stream 210 may then, in a subsequent separation and purification step 211 using methods such as PSA (Pressure Swing Adsorption) and/or VSA (Vacuum Swing Adsorption), be divided into waste 212, at least one product 213, such as syngas, pure hydrogen and/or pure carbon monoxide, which may then be compressed and delivered, and a recycled fuel 214. The steam cycle 207 also receives heat 203 from the furnace 204, as well as heat 215 from the high temperature shift 208 and heat 216 from the low temperature shift 209. It may produce excess steam 217 for export to other processes.

Cooling of the effluent 205' of the reforming step 205 may be implemented by transferring heat to the steam cycle or to the feed stream 201 upstream of the reforming step 205.

Alternatively, the high and low temperature shifts 208, 209 may be substituted by a single medium temperature shift, as it has recently become possible thanks to new technological developments and catalyst research.

As depicted in Fig. 2B, conventionally the process steam 206 from the steam cycle 207 is simply mixed with the feed stream 201 before the reforming step 205 to form a mix feed stream 201'. A typical setup for a hydrocarbon feed stream 201 of 30 t/h of natural gas, at 30 bar of pressure and a temperature of 340°C after the desulfuration step 202, would need 96 t/h of steam at 30 bar, resulting into a mix feed stream 201' at 312°C and 30 bar for the reforming step 205. As already stated, the generation of such quantities of steam would be highly energy intensive.

For further processing after the low temperature shift 209, the output stream 210 will usually have to be cooled down, for instance from 220°C to 40°C, in a heat exchange 218, as illustrated in Fig. 2C that will offer substantial potential for heat recovery by appropriate heat integration.

Whilst in most of the prior-art processes heat has been efficiently recovered both from the effluent 205' of the reforming step 205 and from the effluent 208' of the high temperature shift 208, the heat remaining in the output stream 210 downstream of the low temperature shift 209 has not always been efficiently recovered, because of its much lower temperature level. Table 1 and the first data row of Table 2 show, respectively, the energy data and steam requirements of an existing baseline SMR process. The second data row of Table 2 refers to the same existing baseline SMR process after optimisation by conventional means. This optimisation will increase the excess steam 217 from 112.12 t/h in the existing baseline to 122.02 t/h.

To reduce the mass flow rate of process steam 206 required for the reforming step 205, the feed stream 201 may be saturated with steam in a heat and mass exchange 219 with a liquid water stream 220, as illustrated in Fig. 2D, after the desulfuration step 202 and before the addition of process steam 206. Such a heat and mass exchange 219 may be carried out, for instance, in a packed column, or saturation tower. In the illustrated example, the feed stream 201 is previously cooled down in a heat exchange 221 from 340°C to 176 °C and then introduced at the bottom of the packed column.

A liquid water stream 220 of 180 t/h is introduced at the top of the packed column, where it will stream down against the flow of the feed stream 201, partly evaporating in said heat and mass exchange 219 with the feed stream 201. The feed stream 201, having absorbed 10.6 t/h of steam and 6.530 MW of heat in this heat and mass exchange 219, will be extracted at the top of the packed column at a temperature of 170°C, whereas the remaining 169.4 t/h of the liquid water stream 220 will be extracted at the bottom of the packed column at a temperature of 144.23°C. With a water balance compensation 221 of 10.6 t/h, also at 144.23°C, making up for the steam evaporated in the heat and mass exchange 219, the liquid water stream 220 will be pumped back up by a pump 222 and heated up in a heat exchange 223 with 6.225 MW of heat before being introduced again in the same initial condition at the top of the packed column.

Whereas such a direct heat and mass exchange 219 as is illustrated in Fig. 2D reduces the energy requirements of the SMR process, the remaining energy savings potential remains high. The result of introducing this direct heat and mass exchange 219 in the conventionally optimised baseline SMR process is illustrated in the third column of Table 2. The mass flow rate of process steam 206 is reduced from 96 t/h to 85.40 t/h, and that of the excess steam 217 increases to 128.95 t/h.

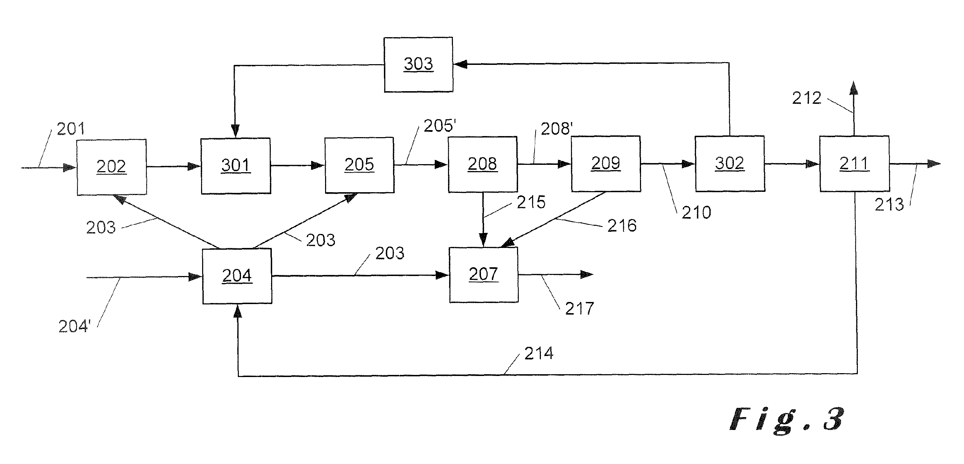

Fig. 3 illustrates an example of a SMR process according to the invention. This process fundamentally differs from that illustrated in Fig. 2A in that it further comprises a first direct heat and mass exchange 301 between the desulfuration step 202 and the reforming step 205, a second direct heat and mass exchange 302 between the low temperature shift 209 and the separation and purification step 211, and heat and mass integration 303 linking both heat and mass exchanges 301, 302. While this seems similar to what was disclosed in United States Patents US 4,072,625 and US 4,238,403 under "Example 2", in that prior art process the process pinch was not taken into consideration, resulting in a heat exchange across the pinch point in the first direct heat and mass exchange and thus in a suboptimal energy use. Further, as can be demonstrated by rigorous pinch analysis, the incremental energy improvement achieved by adding the second direct heat and mass exchange can be improved much further with a series of additional measures built up on the combination of the first and second direct heat and mass exchange.

In the steam process of the invention, the first and second direct heat and mass exchange will preferably be operated with a flow of circulating water that enables minimum temperature approaches DTₘᵢₙ at the pinch point in both the first and the second direct heat and mass exchanges 301,302. For these direct heat and mass exchanges, a conservative DTₘᵢₙ is about 3 K, meaning a minimum difference of 3 K, that is, 3°C, between the hot and cold streams, as opposed to 10-15 K for a heat exchange in a conventional heat exchanger.

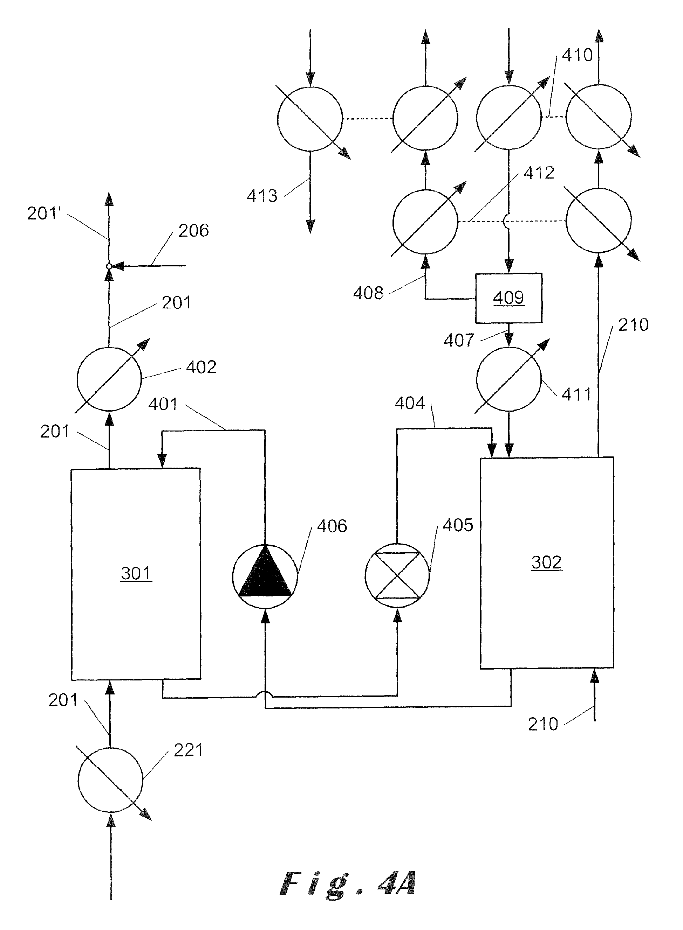

In a first embodiment of the invention, illustrated by Fig. 4A, both the first and second direct heat and mass exchanges 301,302 only involve temperatures not higher than the pinch point. In this process, the feed stream 201 may be saturated with steam in the first direct heat and mass exchange 301 with a first liquid water stream 401. This first direct heat and mass exchange 301 may be carried out, for instance, in a first packed column, or saturation tower, similarly to the heat and mass exchange 219 illustrated in Fig. 2D. This saturation tower may be packed with a random packing material, such as, for instance, metal random packing material of the type PALL-RING® size 50 mm, or with a structured packing. In the illustrated example, with a saturation tower diameter of 2.30 m and an effective height of 4 m, the pressure drop in the saturator may be limited to less than 30 mbar without any special precaution.

In the illustrated example, the feed stream 201 is also previously cooled down in a heat exchange 221 from 340°C to 176 °C and then introduced at the bottom of the packed column at 30 bar of pressure. A first liquid water stream 401 of 180 t/h is introduced at the top of the packed column, where it will stream down against the flow of the feed stream 201, partly evaporating in said heat and mass exchange 219 with the feed stream 201.

The feed stream 201, having absorbed 10.6 t/h of steam and 6.530 MW of heat in this heat and mass exchange 219, will be extracted at the top of the packed column at a temperature of 170°C and 30 bar of pressure. The steam saturated feed stream 201 will then be heated up in a heat exchange 402, where it will receive 4.628 MW of heat, before the addition of 85.4 t/h of process steam 206 at 319.0°C and 30 bar, carrying 60.156 MW of heat. The resulting mix feed stream 201' is at 312°C, and will then be preheated to 495°C before entering the reforming step 205.

The remaining 169.4 t/h of the first liquid water stream 401 will be extracted at the bottom of the saturation tower as a second liquid water stream 404 at a temperature of 144.23°C. Part of this second liquid water stream 404 may be diverted and removed from the circulation (not shown) in case of unsteady operation of the plant or during shut-down, but in the standard operation mode as illustrated in the first embodiment it is integrally introduced at the top of a second packed column, the "heat and condensate stripping tower", after its pressure is reduced to around 26 bar in a turbine 405, which may recover at least part of said pressure as mechanical work for other uses. Alternatively, a simple pressure relief valve may be used to reduce said pressure instead of turbine 405. The heat and condensate stripping tower, like the saturation tower, may be packed with random packing or structured packing material. It is comparable to a conventional wash tower as is frequently used in chemical and petrochemical processes to remove undesired components from a gaseous stream by scrubbing it with a liquid stream flowing in the opposite direction. This principle is also well known in the syngas industry, since washing towers have been applied as CO₂ stripping towers, using circulating monoethanolamine (MEA), methyldiethanolamine (IDEA) or a similar absorption fluid. However, whereas in conventional wash towers the heat transfer between liquid and gaseous streams is a secondary effect, in this heat and condensate stripping tower it is going to be a primary objective.

With a heat and condensate stripping tower diameter of 2.80 m and a height of 1.50 m, the pressure drop in the heat and condensate stripping tower can be limited to 40 mbar with random packing. With a structured packing material, the pressure drop will be much lower, which would allow a reduction of the tower diameter, increasing liquid velocity and thus the heat transfer coefficient. The smaller volume of the tower and of the required packing material could more than compensate the increased cost of the packing material.

The output stream 210, resulting from the reforming step 205 and the high and low temperature shifts 208,209, is introduced at the bottom of the heat and condensate stripping tower at 26 bar of pressure and its dew point temperature of 176°C, so that a second direct heat and mass exchange 302, between the second liquid water stream 404 and the output stream 210, will be carried out in the heat and condensate stripping tower. The second liquid water stream 404 will flow down the heat and condensate stripping tower against the flow of the output stream 210, absorbing 6.506 MW of heat and condensing 9.77 t/h of water from the output stream 210. In the illustrated example, the cooled down and condensate-stripped output stream 210 will be extracted at the top of the heat and condensate stripping tower at 170.77°C, whereas 180 t/h of liquid water will be extracted at 173°C at the bottom of the heat and condensate stripping tower to form the abovementioned first liquid water stream 401, which will be pumped by a pump 406 back into the saturation tower.

To make up for the difference between the 10.6 t/h of liquid water evaporated in the first direct heat and mass exchange 301 and the 9.77 t/h of water condensed in the second direct heat and mass exchange 302, an additional liquid water stream 407 of 0.83 t/h at 144.23°C will be introduced, together with the second liquid water stream 404, at the top of the heat and condensate stripping tower and will also take part in the stripping of heat and condensate from the output stream 210.

In the illustrated embodiment, in order to obtain said additional liquid water stream 407, as well as a boiler feed water stream 408, water is fed into a de-aerator 409 after being heated up from ambient temperature to 120°C in a heat exchange 410 with the output stream 210 downstream of the second direct heat and mass exchange 302. The additional liquid water stream 407 is heated up to 144.23°C in another heat exchange 411 after leaving the de-aerator 409, whereas the boiler feed water stream 408 is first heated up to 160.77°C in a heat exchange 412 with the output stream 210 downstream of the second direct heat and mass exchange 302 but upstream of the heat exchange 410, and then further heated up to 310°C in yet another heat exchange with hot flue gasses 413. Operating parameters for this first embodiment of the invention are listed in the fourth data row of Table 2. While the required mass flow rate of process steam 206 remains unchanged with respect to the prior art illustrated in Fig. 2D, total steam production can increase, increasing the mass flow rate of excess steam 217 to 130.03 t/h.

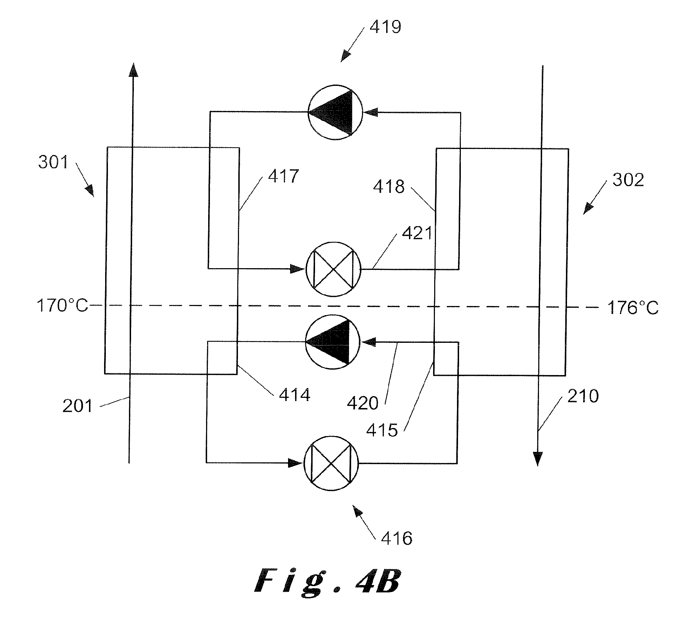

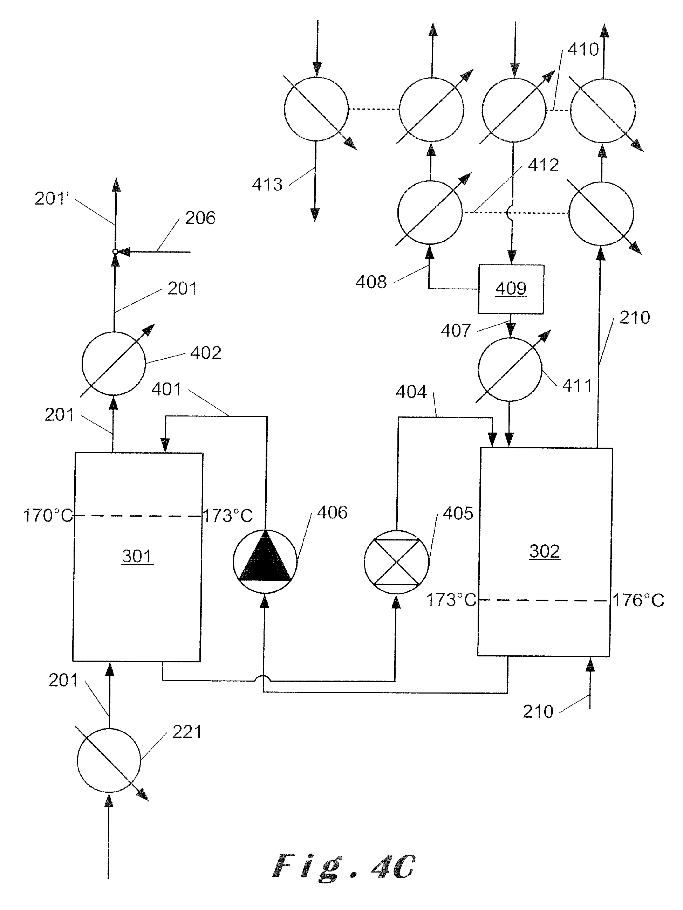

Turning now to Fig. 4B, the first and second direct heat and mass exchanges 301, 302 may, apart from below-pinch sections 414, 415 linked by a below-pinch heat- and mass-carrying liquid water circulation 416, also have above-pinch sections 417, 418, linked by a separate heat and mass-carrying liquid water circulation 419 and thus permitting heat and mass integration not only below the pinch point, but also above the pinch. However, as can be seen in Fig. 4B, in segments 416, 419 of the below- and above-pinch heat- and mass-carrying liquid water circulations 416, 419, respectively, liquid water is pumped at the pinch point temperature in opposite directions between the same points in the first and second direct heat and mass exchanges 301,302. The above-pinch sections 417,418 and the below-pinch sections 414,415 of the first and second direct heat and mass exchanges 301,302 may be matched in such a way that the mass flow rate in the segment 421 of the above-pinch heat and mass carrying liquid water circulation 419 returning to the second direct heat and mass exchange 302 is the same as the mass flow rate in the opposite segment 420 of the below-pinch heat and mass carrying liquid water circulation 416 entering the first direct heat and mass exchange 301. In this case, since their temperature is the same, the opposite segments 420,421 of said heat and mass-carrying liquid water circulations 416,419 compensate each other and can be omitted resulting in another embodiment of the invention, as is illustrated, for example, in Fig. 4C.

While the general set-up of the embodiment shown in Fig. 4C is similar to that shown in Fig. 4A, in this embodiment the output stream 210 enters the second direct heat and mass exchange 302 directly after the low temperature shift 209 without a prior cooling, and thus at a higher temperature of 220.0°C, that is, above its dew point at 176°C, which determines the process pinch point. This process pinch point is denoted in Fig. 4C with intermittent lines dividing both the first and second heat and mass exchanges 301, 302 and linking in each case the hot stream and cold stream pinch point temperatures of, respectively, 173°C and 170°C for the first heat and mass exchange 301, and 176°C and 173°C for the second heat and mass exchange 302. As a result the first and second direct heat and mass exchanges 301,302 will be intensified and the heat and mass circulation between them increased, with a higher flow rate in the first liquid water stream 401.

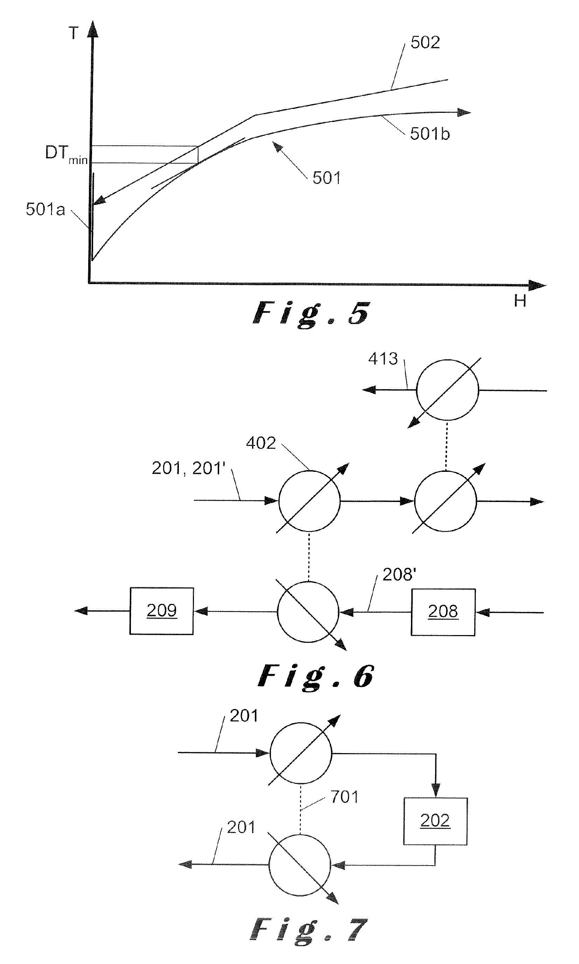

In this embodiment, the first water stream 401 will be extracted from the heat and condensate stripping tower and introduced in the saturation tower at 190.11°C, with a mass flow rate of 186.26 t/h. As a result, the first direct heat and mass exchange 301 will be increased to 10.826 MW of heat and 16.86 t/h of evaporated water from the first liquid water stream 401 to the feed stream 201. The feed stream 201 will as a result leave the saturation tower at an increased temperature of 183.65°C, thus also above the pinch point. Fig. 5 illustrates the T-H operating lines 501, 502 of, respectively, the feed stream 201 and the first liquid water stream 401 in the first direct heat and mass exchange 301. The operating line 501 of the feed stream 201 shows an initial temperature decrease 501 a by constant enthalpy, as the feed stream 201 first reaches steam saturation, and then an increase 501 b by increasing enthalpy, as heat is transferred from the first liquid water stream 401 to the feed stream 201, raising its temperature and thus increasing the partial pressure at which steam reaches saturation in the feed stream 201. To prevent heat transfer across the pinch, the mass flow rate of the first liquid water stream 401 is such that its operating line is substantially parallel to the tangent of the water saturation line in the feed stream 201 at the pinch point, and ideally separated only by the minimum temperature approach DTₘᵢₙ of the saturation tower. The steam-saturated feed stream 201 will leave the saturation tower at a temperature of 183.65°C and will receive a heat transfer of 4.740 MW in heat exchange 402, before the addition of process steam 206 at 319.0°C and 30 bar. Due to the increased amount of steam received by the feed stream 201 in the saturation tower during the first direct heat and mass exchange 301, the process steam 206 required will be reduced to 79.14 t/h, carrying 55.748 MW of heat.

The second liquid water stream 404, which leaves the saturation tower and is introduced in the heat and condensate stripping tower, will have the same mass flow rate of 169.4 t/h as in the embodiment illustrated in Fig. 4A, and the same temperature of 144.23°C. The mass flow rate of the additional water stream 407, also at 144.23°C, will have to be increased to 6.75 t/h, as there will be a larger liquid water deficit between the condensation in the second direct heat and mass exchange 302 and the evaporation in the first direct heat and mass exchange 301. Due to this increased mass flow rate of the additional liquid water stream 407, a heat transfer of 0.194 MW will be needed in heat exchange 411.

In the second direct heat and mass exchange 302, there will be a heat transfer of 6.732 MW and a condensation of 10.11 t/h of water below the pinch point, and a further heat transfer of 3.9 MW above the pinch point. Operating parameters of this third embodiment of the invention are shown on the fifth data row of Table 2. As can be seen there, the mass flow rate of process steam 206 will decrease to 79.14 t/h and that of the excess steam 217 will increase to 130.69 t/h.

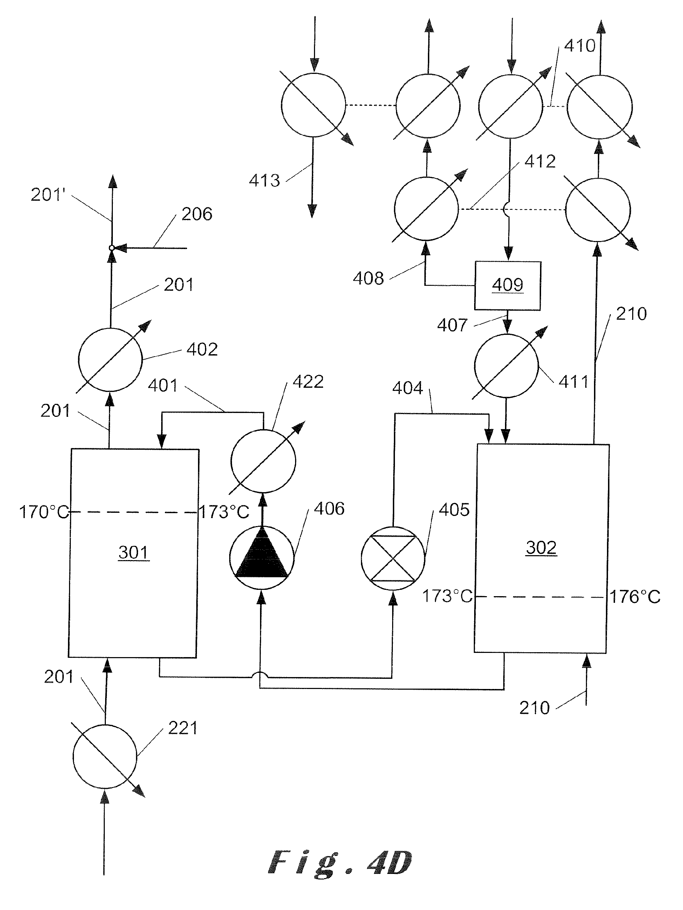

If the temperatures of the saturated feed stream 201 exiting the saturation tower and of the first liquid water stream 401 are both above the pinch point, it becomes thermodynamically efficient to further heat up the first liquid water steam 401 in a heat exchange 422, as in the embodiment illustrated in Fig. 4D. In this fourth embodiment of the invention, a first liquid water stream 401, exiting the heat and condensate stripping tower with an increased mass flow rate of 201.56 t/h and at a temperature of 188.83°C, is heated up to 225°C in a heat exchange 422 of 9.170 MW with a heat source before entering the saturation tower. This temperature is just below the boiling point of water at the pressure of 30 bar of the first liquid water stream 401 downstream of pump 406. With this increased mass flow rate and temperature of the first liquid water stream 401 when entering the saturation tower for the first direct heat and mass exchange 301 with the feed stream 201, the first direct heat and mass exchange will be almost doubled with respect to the embodiment of Fig. 2C to 20.970 MW of heat and 32.16 t/h of steam and the steam-saturated feed stream 201 will leave the saturation tower at 200.26°C. A heat transfer of 5.372 MW will be carried out at heat exchange 402 to heat the steam-saturated feed stream 201 further, and the mass flow rate of process steam 206 will further decrease in this embodiment to 63.84 t/h at 319°C, carrying 44.972 MW of heat.

The second liquid water stream 404 will remain in this embodiment at 169.4 t/h of water at 144.23°C, but, to compensate for the increased water evaporation in the first direct heat and mass exchange 301, the mass flow rate of the additional liquid water stream 407 will have to be increased to 21.23 t/h. A heat transfer of 0.609 MW in heat exchange 411 will thus be required to heat up this additional liquid water stream 407 from 120°C to 144.23°C. In the second direct heat and mass exchange 302, there will be a heat transfer of 7.285 MW and a water condensation of 10.93 below the pinch point, and an additional heat transfer of 3.9 MW above the pinch point. As can be seen in the sixth data row of Table 2, this will decrease the required mass flow rate of process steam 206 to 63.84 t/h, and increase the mass flow rate of excess steam 217 to 132.30 t/h.

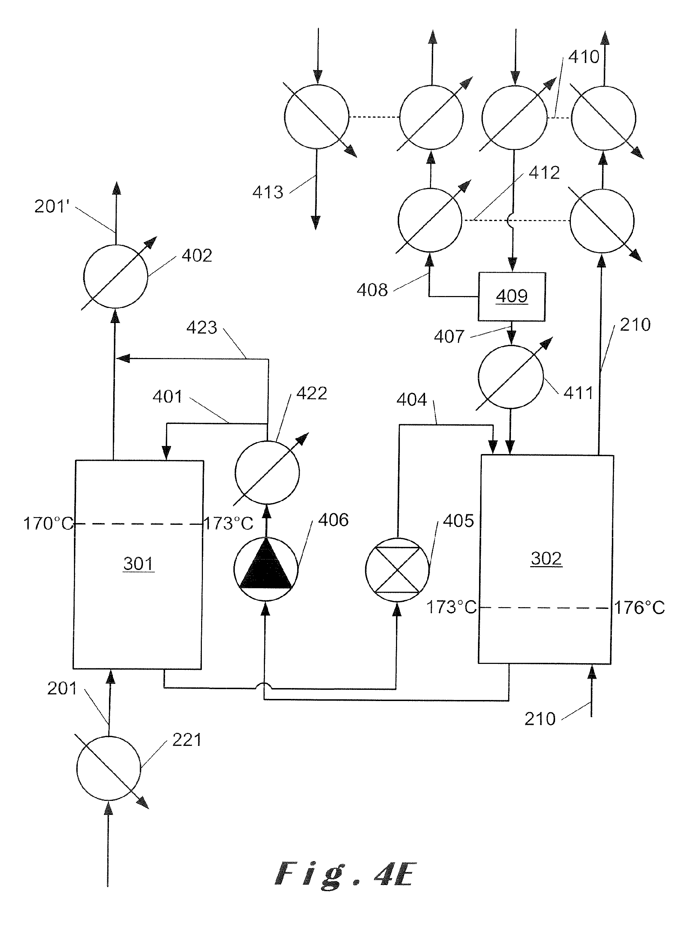

It may be possible to eliminate the requirement of process steam 206 altogether, by, for example, water injection in the steam-saturated feed stream 210 downstream of the first direct heat and mass exchange 301, but upstream of the heat exchange 402, as in a fifth embodiment of the invention illustrated in Fig. 4E. For this purpose, an injection water stream 423 of 63.84 t/h is diverted from a total mass flow rate of 265.40 t/h of liquid water extracted from the bottom of the heat and condensate stripping tower and heated up to 225°C in heat exchange 422. The mass flow rate and temperature of liquid water introduced into the saturation tower for the first direct heat and mass exchange 301 will thus remain unchanged with respect to those of the fourth embodiment illustrated in Fig. 4D, but the heat load of heat exchange 422 will increase to 13.310 MW. The injection water stream 423 will enter the steam-saturated feed stream 201 for example in the form of a mist of water droplets, which will then require the transfer of 42.169 MW of heat in the heat exchange 402 to evaporate these water droplets and heat the resulting mix feed stream 403 up to 312°C; this is done in the kind of apparatus referred to as "two-phase evaporator" and described, amongst others, in the US 2006/0216228 A1 Patent Application and the US 4,681,603 patent, as mentioned before.

In order to compensate for the injection water stream 423, the mass flow rate of the additional liquid water stream 407 will be increased to 81.63 t/h, which will require 2.342 MW of heat at heat exchange 411 to heat it up from 120°C to 144.23°C. In the second direct heat and mass exchange 302 in this embodiment, a heat transfer of 9.592 MW and condensation of 14.37 t/h of water will take place below the pinch point, and an additional heat transfer of 3.9 MW above the pinch point. The heat- and condensate-stripped output stream 210 will exit the heat and condensate stripping tower at 167.85°C. By eliminating the requirement of process steam 206, this embodiment increases the available mass flow rate of excess steam 217 to 139.23 t/h, as can be seen in the eighth data row of Table 2.

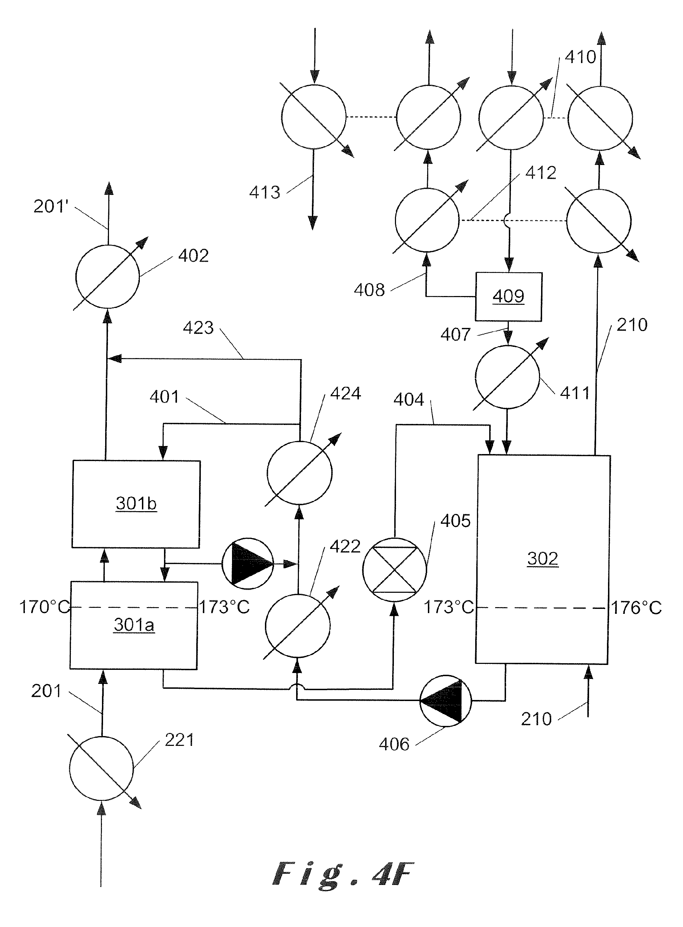

To enable the use of lower temperature heat sources in the process, it is possible to split the first direct heat and mass exchange 301 in two sections 301 a, 301 b, carried out in separate sections of the saturation tower, as in a sixth embodiment of the invention illustrated in Fig. 4F. In this embodiment, only 56.04 t/h of water at 225°C are diverted to the injection water stream 423. 334.36 t/h of liquid water at 225° are introduced at the top of a higher temperature section of the saturation tower for the higher temperature section 301 b of the first direct heat and mass exchange 301, wherein 12.804 MW of heat and 19.48 t/h of steam will be transferred to the feed stream 201. Of the remaining 314.88 t/h of liquid water at 199.15°C, 125 t/h will be diverted and pumped back into the first liquid water stream 401, whereas the rest will flow down to the lower temperature section of the saturation tower for the lower temperature section 301 a of the first direct heat and mass exchange 301, wherein 13.258 MW of heat and 20.48 t/h of steam will be transferred to the feed stream 201 before it flows up, at 189°C, towards the higher temperature section of the saturation tower for the abovementioned higher temperature section 301 b of the first direct heat and mass exchange 301. The feed stream 201 will thus be extracted at the top of the saturation tower at 205.01 °C and saturated with 39.96 t/h of steam after going through both sections 301 a and 301 b of the first direct heat and mass exchange 301. After the injection of the injection water stream 423, a heat transfer of only 38.080 MW is needed in heat exchange 402 to evaporate the injected water and heat the resulting mix feed stream 403 up to 312°C. The second liquid water stream 404 is extracted from the bottom of the lower temperature section of the saturation tower with the same mass flow rate of 169.4 t/h and at the same temperature of 144.23°C as in the fifth embodiment. The second direct heat and mass exchange 302 will thus remain unchanged.

After being extracted from the heat and condensate stripping tower, a liquid water stream with a mass flow rate of 265.4 t/h will be heated up in heat exchange 422 up to 199.15°C before being joined by the 125 t/h of diverted water. In heat exchange 422, 4.628 MW of heat will thus be transferred to this liquid water stream of 265.4 t/h from a heat source hotter than 199.15°C, but which does not need to be hotter than 225°C. After being joined by the 125 t/h of diverted water, the liquid water stream will be heated up again in a further heat exchange 424 with a heat load of 12.772 MW so as to reach 225°C.

As seen in the ninth data row of Table 2, the excess steam 217 mass flow rate in this sixth embodiment remains unchanged with respect to the fifth embodiment. However, the very high temperature heat required to provide the necessary driving force in heat exchange 402 in order to make the two-phase evaporator work appropriately is reduced by about 10% compared with the fifth embodiment. This is advantageous in view of the overall optimisation of the heat exchanger network.

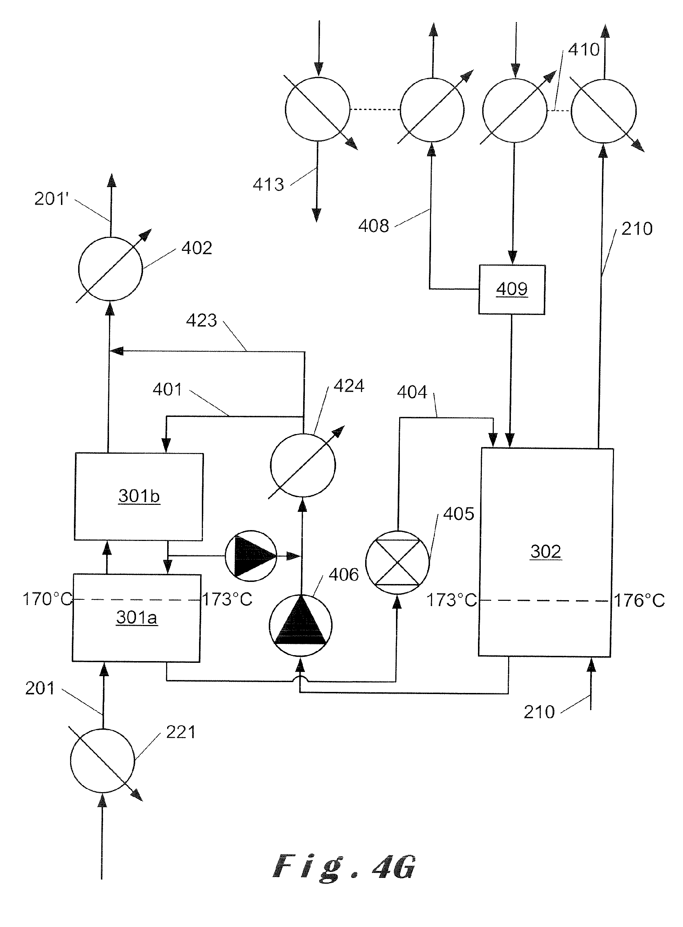

A similar, seventh embodiment is illustrated in Fig. 4G. As in the sixth embodiment illustrated in Fig. 4F, the first direct heat and mass exchange 301 is split in two sections 301 a, 301 b, carried out in separate sections of the saturation tower. However, in this embodiment, the split is at a lower temperature level, namely 183.5°C for the ascending steam-saturated feed stream 201 and 189.88°C for the descending liquid water. As a result, in this embodiment, the liquid water extracted from the bottom of the heat and condensate stripping tower is heated up to 225°C in heat exchange 424 only after being joined by 98.73 t/h of diverted liquid water at 189.88°C to sum 364.13 t/h of liquid water at 186.35°C. After diverting from this the injection water stream 423 of 55.51 t/h, the resulting first liquid water stream 401 is introduced at the top of the higher temperature section of the saturation tower. In this embodiment, with the view to further optimise the overall heat integration, the feed stream 201 is introduced at the bottom of the lower temperature section of the saturation tower at a lower temperature of 169.23°C, which is identical with the temperature of the output stream 210 exiting the heat and condensate stripping tower. In the lower temperature section 301 a, 10.916 MW of heat and 16.77 t/h of steam will be transferred to the feed stream 201. In the higher temperature section 301 b, 15.639 MW of heat and 23.72 t/h of steam will be transferred to the feed stream 201, which will leave the top of the higher temperature section of the saturation tower at 205.28°C. Due to the lower mass flow rate of the water injection stream 423 in this embodiment, only 37.804 MW of heat will have to be transferred in heat exchange 402 to evaporate the injected water and heat the resulting mix feed stream 201' up to 312°C.

Due to the lower temperature of the feed stream 201 before the first direct heat and mass exchange in this embodiment, the second liquid water stream 404 is extracted at the bottom of the lower temperature section of the saturation tower and introduced in the second direct heat and mass exchange 302 also at a slightly lower temperature, namely 143.48°C. The mass flow rate remains the same at 169.4 t/h. To reduce the number of heat exchangers whilst maintaining the same heat recovery, the additional and boiler feed water streams 407, 408 are heated up directly to 159.23°C in heat exchange 410 before being introduced into the de-aerator 409. The additional liquid water stream 407 is then introduced into the heat and condensate stripping tower at 159.23°C directly after leaving the de-aerator 409. The below-pinch part of the second direct heat and mass exchange 302 will decrease to 8.181 MW of heat and 12.27 t/h of condensed water, and the output stream 210 will leave it at 169.23°C.

After leaving the de-aerator 409, the boiler feed water stream 408 is heated up to 310°C in a single heat exchange with hot flue gasses 413.

The arrangement of the higher temperature section of the saturation tower in this seventh embodiment leads to identical energy savings as the arrangement in the sixth embodiment. The mass flow rate and temperature of the liquid water diverted from between the higher and lower sections 301 b, 301 a of the first direct heat and mass exchange 301, however, have been chosen in order to match the heat available from the output stream 210 between the high temperature shift 208 and the low temperature shift 209, which is 17.675 MW, in heat exchange 424. The arrangement proposed in this seventh embodiment therefore offers additional opportunities for reducing investment cost, whilst preserving maximum energy recovery. A slight increase to 139.32 t/h of the excess steam 217 mass flow rate is also achieved, as can be seen in Table 2.

In the various illustrated embodiments of the invention, the temperature of the resulting mix feed stream 201' after heat exchange 402 was kept at 312°C as in the baseline SMR process. However, the temperature required for entering the reforming step 205 is higher and, consequently, heat exchange 402 can also be adjusted in order to use heat from a hotter above-pinch process heat source, such as the effluent 208' of the high temperature shift 208, as illustrated in Fig. 6, which, again, offers additional opportunities for reducing investment cost whilst preserving maximum energy recovery.

Another additional energy recovery measure can be carried out around the desulfuriser 202, as illustrated in Fig. 7. Regenerative cooling may be applied to cool the feed stream 201 downstream of the desulfuriser 202 before entering the first heat and mass exchange 301, so that this heat removed from the feed stream 201 downstream of the desulfuriser 202 in heat exchange 701 is used to preheat the feed stream 201 upstream of the desulfuriser 202.

As can be seen in Table 2, rigorous application of state-of-the-art heat integration rules in an existing baseline SMR process could lead to an increase of high-pressure export steam of 9.9 t/h. Incorporation of a first direct heat and mass exchange in a saturation tower, as shown in Fig. 2D, would enable an increase of 16.8 t/h of high-pressure excess steam 217, whereas the described embodiments of the invention would enable an increase of the mass flow rate of excess steam 217 of up to 27.2 t/h.

There are opportunities for further energy optimisation in the SMR process by preheating up to pinch temperature the fuel required for the reforming step 205 and, if applicable, also the combustion air. Moreover, a reduction of export steam can be traded off against fuel savings by further preheating fuel and combustion air above the pinch. These aspects may be revisited once a final decision has been taken regarding the various potential configurations having impact on the pinch temperature.

The invention has been illustrated for a syngas process based on a steam methane reformer. However, the concept is also applicable for syngas processes using other hydrocarbon feedstock and also for the auto-thermal reformer processes (ATR). For some applications, oxygen or air is also required as one of the feed streams in addition to hydrocarbon feedstock. These streams can also be saturated with water. Similarly, water required as steam for the CO-shift reaction can also be saturated into the reformate between the reformer and the CO-shift reactor.

It is commonly known in the business community that existing plants are often not optimal in terms of heat recovery since the techniques to design optimum heat exchanger networks (HENs) had not been sufficiently developed or disseminated at the time the plants were built. The energy savings potential offered by an optimum heat exchanger network is not necessarily sufficient to justify a retrofit. However, with the process of the invention the energy savings potential can be more than doubled. Moreover, where the conventional optimisation of the heat exchanger network would lead to more steam generation in the steam system 207 and would require replacement of that system including significant changes in the flue gas section, integration of the invention unloads the steam system 207. This also means that there is more scope for plant de-bottlenecking by adding a pre-reformer or a secondary reformer without major changes in the flue gas section. The illustrated embodiments illustrate how a particular configuration can be chosen to fit a particular heat load that is, or becomes, available if a particular retrofit were considered.

New processes usually are equipped with a PSA purification section to remove, among others, the large amount of CO₂ from the reformate. In older plants, CO₂ usually is removed by means of a CO₂ stripping tower, an adsorbent circulation system (MEA or MDEA or equivalent) and an adsorbent regeneration system, driven by the energy available in the reformate exiting a LT shift reactor. This is a very energy intensive process, which is using all of the useful heat available in that reformate stream. With this invention, retrofitting older plants that have a CO₂ stripping tower and replacing the CO₂ removal system with a PSA system becomes much more attractive: the energy that becomes available in the reformate stream can be used in a very efficient way and at least part of the existing hardware that becomes obsolete can be reused for the heat and condensate stripping tower, the heat and mass integration system and the saturation tower.

Finally, as mentioned previously, it is also possible to use other heat sources from outside the process to provide the heat required for the saturator section below the pinch as well as above the pinch. This includes the use of low-pressure or medium-pressure steam, which, through the system, can be upgraded to and exported as high-pressure steam.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

**Table 1: Energy data**

| Tᵢₙ (°C) | Tₒᵤₜ (°C) | ΔH (MW) | |
|---|---|---|---|
| 10 | 120 | 0.685 | Fuel 204 preheat |
| 10 | 120 | 1.956 | Feed stream 201 preheat (1) |
| 120 | 350 | 5.126 | Feed stream 201 preheat (2) |
| 312 | 495 | 16.111 | Mix feed stream 201' preheat |
| 810 | 340 | -44.898 | Reformer effluent 205' cooling |
| 395 | 205 | -17.673 | HTS effluent 208' cooling |
| 220 | 40 | -54.801 | Output stream 210 cooling |
| 135 | 35 | -3.250 | Hydrogen cooling |
| 1035 | 120 | -117.860 | Flue gas cooling |
| 25 | 310 | 75.450 | Water heating in steam cycle 204 |
| 310 | 315 | 76.745 | Phase change in steam cycle 204 |
| 315 | 463 | 31.832 | Steam superheating in steam cycle 204 |

**Table 2: Operating parameters**

| | TOTAL STEAM (108 BAR) | PROCESS STEAM 206 | EXCESS STEAM 217 | EXCESS STEAM INCREASE VS EXISTING | EXCESS STEAM INCREASE VS OPTIMISED |
|---|---|---|---|---|---|
| | T/H | T/H | T/H | T/H | T/H |
| BASELINE PROCESS | | | | | |
| EXISTING | 208.12 | 96.00 | 112.12 | 0.00 | - |
| OPTIMISED | 218.02 | 96.00 | 122.02 | 9.90 | 0.00 |
| WITH SATURATOR | 214.35 | 85.40 | 128.95 | 16.83 | 6.93 |

| EMBODIMENTS OF THE INVENTION | | | | | |
|---|---|---|---|---|---|
| 1ST | 215.43 | 85.40 | 130.03 | 17.91 | 8.01 |
| 3RD | 209.83 | 79.14 | 130.69 | 18.57 | 8.67 |
| 4TH | 196.14 | 63.84 | 132.30 | 20.18 | 10.28 |
| 5TH | 139.23 | 0.00 | 139.23 | 27.11 | 17.21 |
| 6TH | 139.23 | 0.00 | 139.23 | 27.11 | 17.21 |
| 7TH | 139.32 | 0.00 | 139.32 | 27.20 | 17.30 |

## Claims

1. A steam reaction process, in particular a steam-hydrocarbon process, comprising the steps of:
- transferring heat and mass from a first liquid water stream (401) to a feed stream (201) in a first direct heat and mass exchange (301) in which said feed stream (201) is substantially saturated with steam evaporated from said first liquid water stream (401);
- reacting at least part of said feed stream (201) with at least part of said steam so as to produce an output stream (210) comprising at least one reaction product and steam;
- transferring heat and mass from said output stream (210) to a second liquid water stream (404) in a second direct heat and mass exchange (302) in which water is condensed from said output stream (210);
wherein
- said first liquid water stream (401) comprises at least part of a liquid water output from the second direct heat and mass exchange (302);
- said second liquid water stream (404) comprises at least part of a liquid water output from the first direct heat and mass exchange (301);
and
**characterised in that**
- more water is evaporated in the first direct heat and mass exchange (301) than is condensed in the second direct heat and mass exchange (302), and an additional liquid water stream (407) is introduced in the second direct heat and mass exchange (302) so as to maintain the liquid water balance in the process..

2. A process according to claim 1, wherein the additional liquid water stream (407) is such that, in the first heat and mass exchange (301), the first liquid water stream (401) and the feed stream (201) follow temperature-enthalpy curves whose tangents are parallel at their closest temperature approach.

3. A process according to claims 1 or 2, wherein said additional liquid water stream (407) is previously heated up, in particular during a de-aerating step (409), to a temperature close to, but not higher, than said output stream dew point.

4. A process according to any one of the previous claims,
wherein a boiler feed water stream (408) is heated up during a de-aerating step.

5. A process according to any one of the previous claims,
wherein said second liquid water stream (404) is heated up, before said second direct heat and mass exchange (302), to a temperature close to, but not higher than the dew point of said output stream (210).

6. A process according to any one of the previous claims,
wherein the first direct heat and mass exchange (301) takes place in a first packed column.

7. A process according to any one of the previous claims,
wherein the second direct heat and mass exchange (302) takes place in a second packed column.

8. A process according to any one of the previous claims,
wherein the output stream (210) enters the second direct heat and mass exchange (302) at substantially its dew point temperature.

9. A process according to any of claims 1-7, wherein the output stream (210) enters the second direct heat and mass exchange (302) at a temperature higher than its dew point.

10. A process according to claim 9, wherein said first liquid water stream (401) is additionally heated up before said first direct heat and mass exchange (301).

11. A process according to claim 10, wherein, after being additionally heated up, but before the first direct heat and mass exchange (301), part of the first liquid water stream (401) is diverted for other uses, such as water and/or steam injection.

12. A process according to claims 10 or 11, wherein said first direct heat and mass exchange (301) takes place in a first packed column divided into:
a higher temperature section with an input for the first water stream and an output for said feed stream with steam; and
a lower temperature section with a feed stream input and a liquid
water output;
wherein the higher and lower temperature sections are connected so that steam and the feed stream flow from the lower temperature section to the higher temperature section, and liquid water flows in the opposite direction, and wherein part of said liquid water flowing out of the higher temperature section is diverted so as to rejoin the first liquid water stream (401) upstream of said first direct heat and mass exchange (301).

13. A process according to claim 12, wherein said first liquid water stream (401) is heated up before joining said diverted liquid water from the high temperature section.

14. A process according to claims 12 or 13, wherein said first liquid water stream (401) and said diverted liquid water from the high temperature section are heated up together after they join.

15. A process according to any one of the previous claims,
wherein said feed stream (201) contains a significant amount of a hydrocarbon, such as methane, and said output stream (210) contains a significant amount of at least one product, such as hydrogen, carbon monoxide and/or carbon dioxide, resulting from the reaction of said hydrocarbon and steam.

16. A process according to claim 15, wherein, before said first direct heat and mass exchange (301), said feed stream (201) is cooled down after being desulfurised.

17. A process according to any one of the previous claims,
wherein steam and/or liquid water are also injected into the feed stream (201) after the first direct heat and mass exchange (301).
